# EUROPEAN PATENT APPLICATION

(11) **EP 1 785 719 A1**
(43) Date of publication of application: **16.05.2007**
(21) Application number: 04772536.1
(22) Date of filing: 31.08.2004
(51) Int. Cl.: G01N 21/27

(54) **OPTICAL DETECTION METHOD AND OPTICAL DETECTOR**

(71) Applicant: GL Sciences Incorporated, Tokyo 163-1130 (JP)
(72) Inventor: YAMADA, Tsuyoshi c/o GL Sciences Incorporated, Iruma-shi Saitama 358-0032 (JP); ZHOU, Xiaojing c/o GL Sciences Incorporated, Saitama 358-0032 (JP)
(74) Representative: Lorenz, Markus
(86) International application number: PCT/JP2004/012580
(87) International publication number: WO 2006/025104

(57) **Abstract**

An optical detecting method comprising irradiating light emitted from a light source to a sample in a cell inserted in an optical system, detecting light transmitted through the cell, detecting transmitted light on the reference side inserted in the optical system, adjusting those detection signals, and calculating an output from a detector based on the detection signals, wherein the method further comprises adjusting the detection signals on both the sample side and the reference side in such a manner as to correspond to an optimum output level of the detector and restraining a change quantity of a ratio between the detection signals on both the sample side and the reference side constituting the output of the detector and lowering a base line noise level.

## Description

### Technical Field

This invention relates to an optical detecting method and an optical detector which are suited to be used in, for example, a light absorption type of ultraviolet/visible detector for liquid chromatography, a spectrophotometer, a multi-wavelength ultraviolet/visible detector, a photodiode array detector and the like, and capable of realizing detection of absorbance in a wavelength range of the ultraviolet region to the visible region by using a single light source, without the use of two light sources in combination, eliminating the troublesome operation for switching two light sources from one to the other, reducing the number of parts, simplifying the construction, realizing down-sizing, weight-lightening and cost-down, automatically adjusting a light energy at a reduced region or reduced light energy, optimizing light energies on both the sample side and the reference side, restraining an increase in base line noise by a simple means, obtaining the improved sensitivity and reliability, and convenient for maintenance.

### Background Art

There are two types of ultraviolet/visible detectors in optical detectors. One is a fixed wavelength type and the other is a variable wavelength type. The variable wavelength detector comprises an ultraviolet (UV) light source and a visible (VIS) light source. The detector of this type is used with the two light sources. The source must be properly switched one to the other, to obtain a wavelength range of an ultraviolet (UV) region to a visible (VIS) region (e.g.,190nm to 800nm). The light incidents on a flow cell, and the concentration of sample delivered within the flow cell is analyzed quantitatively basing on the absorbance or reflectance of the light.
In the variable wavelength detector, a deuterium lamp (hereinafter referred to as the D₂ lamp) and a halogen /tungsten lamp are generally employs as light source, respectively, in the ultraviolet region (190 nm to 370 nm) and the visible region (300 nm to 800 nm) (see, for example, Non-patent Document 1).

The above-mentioned detectors are such designed that the light energies in the respective wavelength regions are kept in predetermined values or more, respectively. When the light energies are less than the predetermined values, the base line noise of the output signal is increased and the detection sensitivity becomes low.
For example, the wavelength region for the deuterium (D₂) lamp is normally 190 nm to 370 nm. If the wavelength is increased beyond this range, the light energy is significantly reduced or lowered. Thus, conventionally, a halogen or tungsten lamp is used to increase the light energy.

However, the variable wavelength detector requires two different lamps. Thus, the expense for the lamps and power consumption are increased to that extent, thereby increasing the equipment cost and analysis cost. Moreover, switching the two lamps from one to the other, a driving mechanism and an installation space for it are required. The switching is troublesome. Moreover, the timing for switching the lamps is difficult, and the increase in base line noise caused by decrease in the light energy is accompanied. Moreover, the use of driving mechanism results in an expensive, large-size and heavy weight detector.
Moreover, since the two lamps are arranged one at the front and the other at the rear of a narrow lamp chamber of the detector main body, difficulty is encountered when the lamp on the deep side is taken out at the time of maintenance. A cover must be removed and the taking-out work becomes large in scale. Thus, those detectors are inconvenient for maintenance.

An output A(absorbance) of the ultraviolet/visible detector can be calculated from A = log (REF/SAMP) wherein REF expresses a light energy on the reference side and SAMP expresses a light energy on the sample side.
According to the above equation, when REF and SAMP are high the minimum fluctuation in output A(absorbance) shows far less as compared with low REF and SAMP volumes. Consequentially, the low values of REF and SAMP lead to larger fluctuation.
Specifically, over the wavelength region where the light energy is lowered, the base-line noise is greatly increased and the detection sensitivity is decreased. Therefore, it is necessary to increase both REF and SAMP values to restrain the level of the base-line noise as much as possible.

As a device designed for solving the above problems, there is a known spectrophotometer (see, for example, Reference Patent 1) which comprises an attachment sensor for discriminating the presence of the cell at the attachment position of the cell and the kind thereof, an adjustment circuit capable of changing the amplification factor, and an amplification factor control section for changing the amplification factor of the amplification circuit. The amplification factor control section reads the cell information from the attachment sensor and changes the gain resistance in accordance with the information, so that the amplification factor of the amplification circuit is automatically adjusted. In this way, analysis can be performed with high sensitivity which is in accordance with different cell.

However, since it is necessary for the spectrophotometer to adjust detection sensitivity of the sample side photodiode in accordance with different cell to be used, and automatically change the gain resistance and amplification factor at every time to adjust the detection sensitivity. However, the adjustment is made with respect to only the sample side amplification factor and no adjustment is made with respect to the reference side amplification factor.
Thus, the base line noise cannot sufficiently be restrained. Moreover, the adjustment of the amplification factor becomes a routine work in accordance with different cell, and the adjustment of the amplification factor or sensitivity in accordance with the change in light energy of the lamp cannot be performed.

Non-patent Document 1: Edited by Shoshin Nakagawa and Keisuke Makino, High- performance liquid chromatography for life science, Base and Test, issued by K.K. Hirokawa Shoten, June 25, 1988, pages 32 and 33.
Patent Document 1: Japanese Patent Application Laid-Open No. 2000-55808.

### Disclosure of the Invention

### Problem to be Solved by the Invention

An object of the present invention is to provide an optical detecting method and an optical detector which are suited to be used for, for example, a light absorption type of the ultraviolet/visible detector for liquid chromatography, a spectrophotometer, a multi-wavelength ultraviolet/visible detector, a photodiode array detector and the like, and capable of realizing detection of absorbance of light at a wavelength region of the ultraviolet to the visible regions by using a single light source, without the use of two light sources in combination, eliminating the troublesome operation for switching two light sources from one to the other, reducing the number of parts, simplifying the construction, realizing down-sizing, weight-lightening and cost-down, automatically adjusting a light energy at a reduced region or reduced light energy, optimizing light energies on both the sample side and the reference side, restraining increase of base line noise by a simple means, obtaining both the improved sensitivity and the reliability of detection, and convenient for maintenance.

### Means for Solving the Problem

The present invention is chiefly characterized by an optical detecting method comprising irradiating light emitted from a light source to a sample in a cell inserted in an optical system, detecting light transmitted through the cell, detecting transmitted light on the reference side inserted in the optical system, adjusting those detection signals, and calculating an output from a detector based on the detection signals, wherein the method further comprises adjusting the detection signals on both the sample side and the reference side in such a manner as to correspond to an optimum output level of the detector and restraining a change quantity of a ratio between the detection signals on both the sample side and the reference side constituting the output of the detector. Accordingly, the increase of base line noise caused by decrease in of the light energy can be restrained, the detection sensitivity can be improved and the reliability can be enhanced.

The present invention is chiefly characterized by an optical detector comprising an optical system capable of irradiating light emitted from a light source to a sample in a cell, a sample side light receiving means capable of detecting light transmitted through the cell, a light receiving means capable of detecting a transmitted light on a reference side inserted in the optical system, an adjusting circuit capable of adjusting the detection signal and an adjusting/controlling section capable of changing an adjustment ratio of the adjusting circuit, wherein the detection signals on both the sample side and the reference side are adjusted in such a manner as to correspond to an optimum output level of the detector and a change quantity of a ratio between the detection signals on both the sample side and the reference side constituting the output of the detector is restrained. Accordingly, the increase of base line noise caused by decrease in the light energy can be restrained, the detection sensitivity can be improved and the reliability can be enhanced.
Moreover, according to the present invention, a slit capable of changing the width of an optical path is disposed on an optical axis with respect to the reference side of the optical system and light receiving quantities in light receiving sections on both the sample side and the reference side are adjusted to approximately equal through the slit. Accordingly, the adjustment ratios of the sample side to the reference side are restrained in difference, the light energies on both the sample side and the reference side are adjusted and the increase of base line noise caused by decrease in the light energy can be restrained.

According to the present invention, a reflector capable of reflecting and focusing light emitted from the light source is installed in a given position in a standstill manner. Accordingly, it is no more required a mechanism necessitated by the structure and the space for movement. The number of parts can be reduced and down-sizing and weight-lightening can be achieved.
Moreover, according to the present invention, the light source is a single light source, and the light energies on both the sample side and the reference side in a desired wavelength region of the light source can be adjusted based on the adjustment ratio of the adjusting/controlling section. Accordingly, the construction can be simplified by use of a single light source and the power consumption can be reduced. Moreover, increase of output base line noise caused by decrease in the light energy with the lapse of time can be restrained.
Moreover, according to the present invention, the light energies on both the sample side and the reference side in a wavelength region adjacent to or partly overlapped with the wavelength region of the light source can be adjusted based on the adjustment ratio of the adjusting/controlling section. Accordingly, elimination of the use of a plurality of light sources having difference wavelength regions is realized, the construction can be simplified by use of a single light source, and the power consumption can be reduced.

According to the present invention, the light energies on both the sample side and the reference side in a wavelength region adjacent to or partly overlapped with the light source or the wavelength region of the light source are adjusted based on the adjustment ratio of the adjusting/controlling section and the light energies in a wavelength region of the light source or in a wavelength region adjacent to or partly overlapped with the wavelength region of the light source can be restrained. Accordingly, the analysis of the light energy different wavelength region from the light source in use can be realized by adjusting/controlling operation. Decrease in light energy of the light source in use caused by lapse of time can be restrained and detection over a wide wavelength region can be performed smoothly and reliably.
According to the present invention, the wavelength region includes an ultraviolet region and a visible region. The present invention is suited for a detector which is used in those wavelength regions.

Moreover, according to the present invention, the optical detector is an ultraviolet/visible type detector, a photodiode array detector, or a multi-wavelength detector. Those detectors can be simplified in construction and can be made at a low cost.
According to the present invention, the single light source is retractably received in a lamp chamber of a lamp house. Accordingly, the replacement of the light source necessitated by lapse of time can easily be performed, and hence maintenance can conveniently be performed.

### Effect of the Invention

According to an optical detection method of the present invention, the detection signals on both the sample side and the reference side are adjusted in such a manner as to correspond with how to optimum output level of the detector and the change quantity in the detection signal ratio of the sample side to the reference side is restrained. Accordingly, the increase of base line noise caused by decreased in the light energy is restrained by a simple means, so that detection sensitivity and reliability can be improved.

According to an optical detector of the present invention, the detection signals on both the sample side and the reference side are adjusted in such a manner as to correspond with how to optimum output level of the detector through an adjusting/controlling section and the change quantity in the detection signal ratio of the sample side to the reference side is restrained. Accordingly, increase of base line noise caused by decrease in the light energy is restrained by a simple means, so that detection sensitivity and reliability can be improved.
Moreover, According to an optical detector of the present invention, a slit capable of changing the width of an optical path is disposed on an optical axis with respect to the reference side of the optical system and light receiving quantities in light receiving sections on both the sample side and the reference side are adjusted with the slit to be approximately equal. Accordingly, the adjustment ratios on both the sample side to the reference side are restrained in difference to reduce difference between the sample and the reference side, the light energies on both the sample side and the reference side are adjusted and the increase of base line noise caused by decrease in the light energy can be restrained.

Moreover, according to an optical detector of the present invention, a reflector capable of reflecting and focusing light emitted from the light source is arranged in a given position in a standstill manner. Accordingly, it is no more required a mechanism necessitated by the structure and the space for movement. The number of parts can be reduced, and down-sizing and weight-lightening can be achieved.
According to an optical detector of the present invention, the light source is a single light source, the light energies on both the sample side and the reference side in a predetermined wavelength region of the light source can be adjusted based on the adjustment ratio of the adjusting/controlling section. Accordingly, the construction can be simplified by use of a single light source and the power consumption can be reduced. Moreover, increase of output base line noise caused by decrease in the light energy with the lapse of time can be restrained.

Moreover, according to an optical detector of the present invention, the light energies on both the sample side and the reference side in a wavelength region adjacent to or partly overlapped with the wavelength region of the light source can be adjusted based on the adjustment ratio of the adjusting/controlling section. Accordingly, elimination of the use of a plurality of light sources having difference wavelength regions is realized, the construction can be simplified by use of a single light source, and the power consumption can be reduced.
Moreover, according to an optical detector of the present invention, the light energies on both the sample side and the reference side in a wavelength region adjacent to or partly overlapped with the light source or the wavelength region of the light source are adjusted based on the adjustment ratio of the adjusting/controlling section and the light energies in a wavelength region of the light source or in a wavelength region adjacent to or partly overlapped with the wavelength region of the light source can be restrained. Accordingly, the analysis of the light energy in different wavelength region from the used light source can be realized by adjusting/controlling operation. The decrease in light energy of the used light source caused by lapse of time can be restrained and detection over a wide wavelength region can be performed smoothly and reliably.

According to an optical detector of the present invention, the wavelength region includes an ultraviolet region and a visible region. The present invention is suited for a detector which is used in those wavelength regions.
Moreover, according to an optical detector of the present invention, the optical detector is an ultraviolet/visible type detector, a photodiode array detector or a multi-wavelength detector. Those detectors can be simplified in construction and can be made at a low cost.
Moreover, according to an optical detector of the present invention, the single light source is retractably received in a lamp chamber of a lamp house. Accordingly, the replacement of light source necessitated by lapse of time can easily be performed and maintenance can conveniently be performed.

### Brief Description of Drawings

FIG. 1 is a front view of an ultraviolet/visible detector incorporated with the present invention.
FIG. 2 is a plan view showing an optical system path employed in the present invention.
FIG. 3 is a sectional view showing, on an enlarged basis, a state attached with a D₂ lamp employed in the present invention.
FIG. 4 is an explanatory view showing an optical system path employed in the present invention.
FIG. 5 is a control block diagram employed in the present invention.
FIG. 6 is a spectral characteristic diagram on the ultraviolet side of the present invention, showing a state before and after the adjustment of the adjustment ratio of output signal from a detector.

FIG. 7 is a spectral characteristic diagram on the visible side of the present invention, showing a state before and after the adjustment of the adjustment ratio of output signal from a detector.
FIG. 8 is a spectral characteristic diagram of output signal from a detector in a wavelength of 638 nm of the present invention, showing a state before and after of the adjustment of the adjustment ratio.
FIG. 9 is an optical system path diagram of a detector in which the present invention is applied to a photodiode array.
FIG. 10 is an optical system diagram in which the present invention is applied to a multi-wavelength ultraviolet/visible detector.

### Description of Reference Numeral

1.....detector (ultraviolet/visible detector)
4.....lamp house
28.....lamp receiving chamber
29.....light source (D₂ lamp)
32.....reflector (first reflector)
37.....cell (flow cell)
38.....light receiving means (sample side photodiode)
39..... slit (second slit)
40.....light receiving means (reference side photodiode)
43.....programmable amplifier
47.....adjusting/controlling section (automatic light energy adjusting section)
Ss....sample side detection signal
Sr.....reference side detection signal

### Best Mode for Carrying Out the Invention

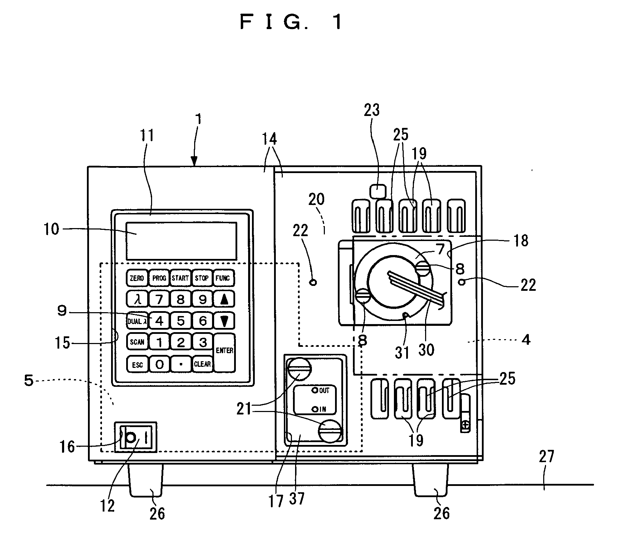

Embodiments of the present invention will be described with reference to the accompanying drawings in which the present invention is applied to an ultraviolet/visible detector. In FIGS. 1 to 8, reference numeral 1 denotes a horizontally long detector housing in which an optical system apparatus 2 capable of forming an optical system path as later described and a control system apparatus 3 disposed at a deep part of the housing 1 are arranged.
Of all, the optical system apparatus 2 is roughly comprised of a metal-made lamp house 4 and a block housing 5. A lamp attaching metal fitting 7 is attached to an upper part of a front surface of the lamp house 4 through machine screws 8. An input control panel 11, a power supply switch 12 and a flow cell 37 are attached to a front surface of the block housing 5. The input control panel 11 is comprised of ten keys including function keys and a display unit 10.

Synthetic resin-made surface panels 14 are spacedly arranged at front parts of the lamp house 4 and block housing 5. Cutout holes 15, 16, 17 are formed in one side of the panel 14. The input control panel 11, the power supply switch 12 and the flow cell 37 are inserted in those cutout holes 15, 16, 17 with their tops exposed.
A horizontally long square opening window 18 is formed on the other side of the surface panel 14 in such a manner as to face with the lamp attaching metal fitting 7. A plurality of slits 19 are formed at upper and lower parts of the opening window 18. An UV shielding cover 20 is fixed to the outer side of the opening window 18 by machine screws.

In the drawings, reference numeral 21, 22 denote machine screws used for attaching the flow cell 37 and the UV shield cover 19; 23, a magnet attached to an upper part of the surface panel 14; and 24, a surface cover pivotally attached such that the cover 24 can be pivoted forward by serving a lower end part of the other side of the surface panel 14 as a fulcrum, respectively. An upper part of the inner surface of the cover 24 is attracted and retained by the magnet 23.
Reference numeral 25 denotes a plurality of radiation fins protruding from a peripheral surface of the lamp house 4, and 26 denotes a leg attached to a lower surface of the housing 1. The leg 26 can be placed on a working table 27.

A lamp receiving chamber 28 is open at a front surface of the lamp house 4 corresponding to the opening window 18. A D₂ lamp as a light source of an ultraviolet region (190 nm to 370 nm) is removably received in the receiving chamber 28.
A front end part of the D₂ lamp is inserted and fixed in the lamp attaching metal fitting 7. A power supply cord 30 is led out outside from the front end part of the D₂ lamp. In the drawings, reference numeral 31 denotes a positioning recess formed in an outer peripheral surface of the lamp attaching metal fitting 7.

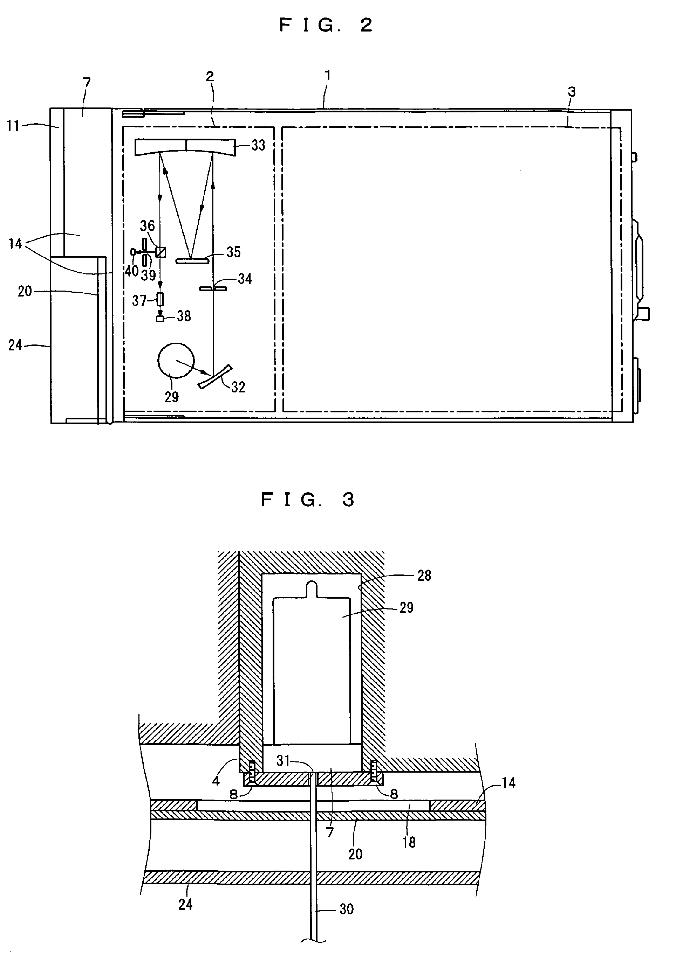

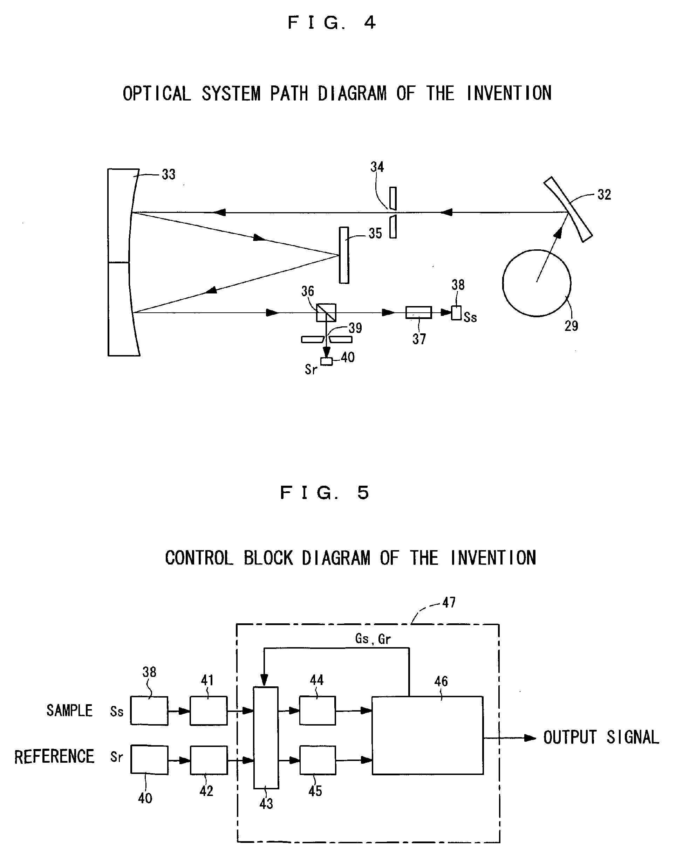

An optical system path including the D₂ lamp is formed in the optical system apparatus 2. In the optical system path, as shown in FIGS. 2 and 4, a first reflector 32, that is a concave mirror (elliptical mirror), is arrange on an irradiation optical axis in a standstill manner, a second reflector 33, that is a concave mirror, is arranged on a reflection optical axis of the first reflector 32, and a first slit 34 is arranged at an intermediate position on an optical axis between the first and second reflectors 32, 33. The second reflector 33 of this embodiment is composed of two lenses joined together.

A grating 35, that is a diffraction lattice, is arranged on a reflection optical axis of the second reflector 33. The spectral light of the grating 35 is made incident to the second reflector 33. A half mirror, that is a spectral mirror, is arranged on a reflection optical axis of the spectral light reflected by the second reflector 33. A flow cell 37 communicating with an separation column (not shown) of a high- performance liquid chromatograph (HPLC) is arranged on an optical axis of the light transmitted through the half mirror 36. A sample eluded from the column flows through the flow cell 37 together with an eluent.

A photodiode 38 on the sample side is arranged on an optical axis of the light transmitted through the flow cell 37. The light energy of the light transmitted through the sample is converted into an electrical signal, that is a voltage value in this embodiment, by the photodiode 38 so that the light energy converted into the electrical signal can be detected.
A second slit 39 whose optical path is variable in width is arranged on the optical axis of the light reflected by the half mirror 36. The width of the optical path of the second slit 39 is preliminarily increased or decreased and the light energy on the reference side is adjusted generally equal to the light energy in the photodiode 38 on the sample side. By doing so, the adjustment ratios thereof can be restrained in difference so that the light energies on both the sample side and the reference side can be adjusted.
A photodiode 40 on the reference side is arranged on the optical axis of the light transmitted through the second slit 39. The light energy of the transmitted light on the reference side is converted into an electrical signal, that is a voltage value in this embodiment, so that the light energy of the transmitted light on the reference side can be detected.

Detection signals Ss, Sr on the sample side and the reference side are inputted into head amplifiers 41, 42, respectively, adjusted into predetermined quantities, respectively, so as to be inputted into an automatic light energy adjusting section 47, that is an adjusting/controlling section.
The automatic light energy adjusting section 47 comprises a programmable amplifier 43, A/D converters 44. 45 and a calculating section 46. An output value of the programmable amplifier 43 is inputted into the A/D converters 44, 45, converted into a digital signal than then inputted into the calculating section 46 so that a setting gain can be established.

First, before adjustment, that is, before establishment of the setting gain, the gain value of the programmable amplifier 43 is magnified by one, and the lamp light energy value is directly inputted in the calculating section 46 and stored therein.
Next, the calculating section calculates a gain value at each wavelength based on the inputted light energy before adjustment and a light energy optimum value (already preliminarily calculated), and the gain value thus obtained is outputted to the programmable amplifier 43.

The calculating section 46 calculates an output of the detector at each wavelength based on a conditional formula which is already preliminarily stored, under the condition of input of the setting signal, and outputs the calculation result so as to be ready for display.
The conditional formula consists of a logarithm, i.e., log (REF/SAMP) of the light energy ratio of the sample side to the reference side at each wavelength under the adjustment ratios Gs, Gr.

The ultraviolet/visible detector thus constructed is a single light supply eliminating a halogen or tungsten lamp, that is a light supply of light in a visible region and using only a D₂ lamp 29, that is a light supply of light in an ultraviolet region. Accordingly, the equipment cost and power consumption can be reduced to a portion equal to elimination of the halogen or tungsten lamp.
Moreover, since the first reflector 32 placed opposite the D₂ lamp 29 is arranged in a predetermined position and in a standstill manner, a switching mechanism and a switching space, which were conventionally required at the time for using the first reflector in correspondence with two light sources, can be eliminated. Thus, the equipment cost can be reduced and the down-sizing can be achieved to that extent. Accordingly, the down-sizing, weight-lightening and reduced manufacturing cost can be achieved by reducing the number of parts accompanied with elimination of the lamp.

In the optical system according to the present invention, as shown in FIG. 4, since the conventional optical system can be used except that the first reflector 32 is arranged in a standstill manner and the second slit 39 is newly employed, they can easily be manufactured at a low cost. Moreover, the detector conventionally used can be changed or modified.
Although the programmable amplifier 43 is newly employed in the electrical series, a known calculator including a calculating circuit and the storing circuit can be used for it.

At the time for attaching the D₂ lamp 29, the lamp 29 is inserted in the lamp attaching metal fitting and they are fixed by a suitable means. Then, the lamp attaching metal fitting 7 with the lamp 29 inserted therein and fixed is inserted in the lamp receiving chamber 28 of the lamp house 4. Then, the machine screws 8 are inserted in a flange part of the attaching metal fitting 8. The machine screws 8 are then threadingly inserted in the screw holes of the lamp house 4. This status is shown in FIG. 3.
Accordingly, at the time for exchanging the D₂ lamp 29 as later described, the surface cover 24 and the UV shield cover 30 are removed and the machine screws 28 are loosened and withdrawn through the opening window 18. Thus, maintenance can easily be performed.

In case the component of the sample is analyzed using the ultraviolet/visible detector thus constructed, for example, the D₂ lamp 29 is lighted up and the light energy (sample side) and the light energy (reference side) of the flow cell 37 where a prescribed eluate is flowed are measured over a wavelength region of from 190 nm to 800 nm.
By doing so, the light emitted from the D₂ lamp is arrived at the first reflector 32 where the light is reflected. The reflected light is transmitted through the first slit 34 and arrived at the second reflector 33 where the transmitted light is reflected.

The light reflected by the second reflector 33 is arrived at the grating 35 where the reflected light is diffracted and reflected. The diffracted light is arrived at the second reflector 33 where the refracted light is reflected. The light reflected by the second reflector 33 is arrived at the half mirror 36 where the reflected light is split into the sample side and the reference side.

Of the split lights, the light transmitted through the half mirror 36 is arrived at the flow cell 37 where the transmitted light is partly absorbed when it is transmitted through the eluate and arrived at the photodiode 38 as a light receiving means on the sample side where the light is received and the quantity of light on the sample side is measured.
On the other hand, the light reflected by the half mirror 36 is transmitted through the second slit 39 and arrived at the photodiode 40 as a light receiving means on the reference side where the light is received and the quantity of light on the reference side is measured.

At that time, the width of the optical path of the second slit 39 is made variable and the light energy on the sample side and the light energy on the reference side are adjusted to be generally equal to each other. By doing so, the adjustment ratios of the light energy on the sample side and the light energy on the reference side can be restrained in difference and the light energies on both the sample side and the reference side can be adjusted.

On the other hand, the optimum value, etc. of the light energies on both the sample side and the reference side at each wavelength and the light energies of the respective wavelengths at the time of measurement are inputted into the calculating section 46.
Under the condition of input of the optimum light energy and the detection signals Ss, Sr at the time of measurement, the calculating section 46 calculates the adjustment ratio at each wavelength based on the conditional formula which is already preliminarily stored, and outputs the result as a control signal to the programmable amplifier 43.

The automatic light energy adjusting section 47 comprises the programmable amplifier 43, the A/D converters 44, 45 and the calculating section 46. The section 47 inputs the output value of the programmable amplifier 43 into the A/D converters 44, 45. After converting into a digital signal, the section 47 inputs the digital signal into the calculating section 46 so as to establish a setting gain.
First, before adjustment, in other words, before establishment of the setting gain, the gain value is multiplied by one and the light energy of the lamp is directly inputted into the calculating section 46 and stored therein.
Next, based on the light energy before adjustment inputted into the calculating section 46 and the optimum value of the light energy (already preliminarily calculated), a gain at each wavelength is obtained through calculation and the gain value thus obtained is outputted to the programmable amplifier 43.

The calculating section 46 calculates an output, i.e., log (REF/SAMP) of the light energy ratio between the sample side and the reference side at each wavelength under the adjustment ratios Gs, Gr, of the detector at each wavelength based on a conditional formula which is already preliminarily stored, under the condition of input of the setting signal, and outputs the calculation result so as to be displayed on the display unit 10.

As apparent from the foregoing, according to the present invention, the light energies on both the sample side and the reference side are adjusted, and even if the output of the detector, i.e., the sample side and the reference side of the log (REF/SAMP) are individually varied, the quantity of variation becomes smaller compared with the case wherein both the sample side and the reference side are small. Thus, the noise line level of the base line is lowered to that extent, and sensitivity and reliability are improved.

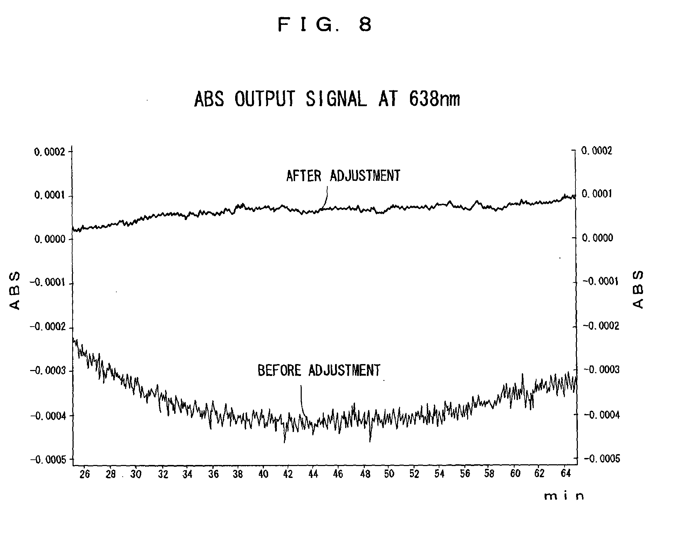

This status is shown, for example, in FIG. 8. The light energy on the visible side tends to be lowered at the wavelength of 638 nm of the visible region. Under this condition, the light energies before adjustment of FIG. 8 to which the present invention is not applied, are low on both the sample side and the reference side, and the noise level of the output base line is large.
In contrast, the light energy after adjustment of FIG. 8 to which the present invention is applied, becomes the optimum value on both the sample side and the reference side, and the noise level of the base line is small.

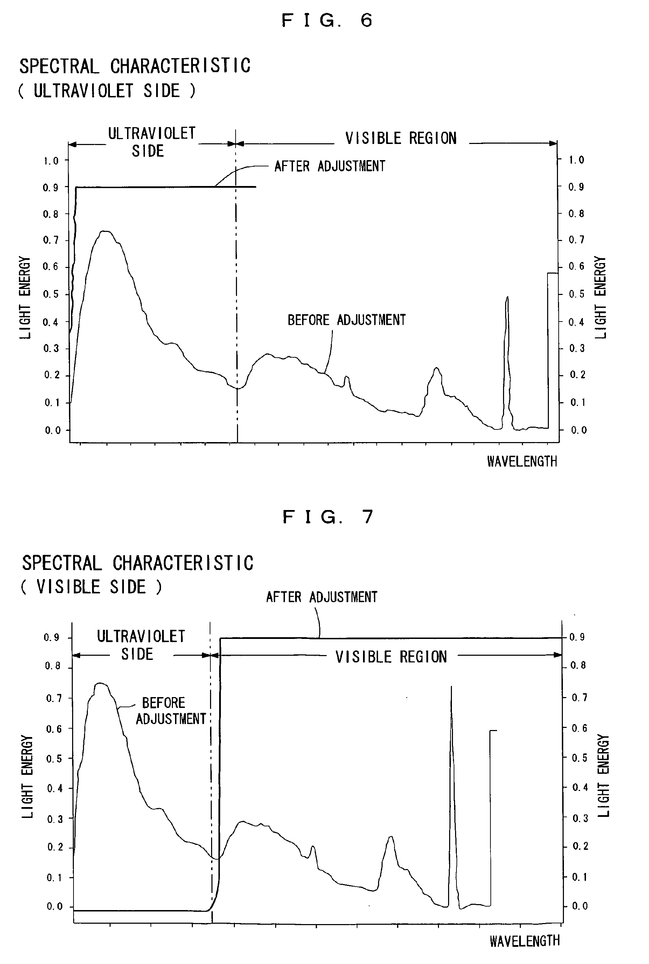

On the other hand, in case the present invention is applied to absorptiometry of light within the ultraviolet region, the light energy of the D₂ lamp tends to be totally high compared with the visible region. As shown in FIG. 6, before adjustment, there is a case lower than an allowable level relative to a tolerable noise level, and the sensitivity is lowered.
In contrast, after the adjustment of FIG. 6 to which the present invention is applied, the level is much higher than the allowable level and the light energies on both the sample side and the reference side become optimum. The output on both the sample side and the reference side becomes large and the noise level of the base line is small.
This means that even under use of the D₂ lamp 29, the increase of base line noise caused by decrease in the light energy with the lapse of time can be restrained and the sensitivity can be maintained/improved.

In case the present invention is applied to absorptiometry of light within the visible region, the light energy of the D₂ lamp 29 is totally low compared with the ultraviolet region. As shown in FIG. 7, before adjustment, the level is almost lower than the allowable level relative to a tolerable noise level. The sensitivity is significantly lowered and practically, it becomes impossible to perform highly sensitive analysis.
In contrast, after the adjustment of FIG. 7 to which the present invention is applied, the level is greatly higher than the allowable level in the visible region, the light energies on both the sample side and the reference side are adjusted, the output on both the sample side and the reference side is large, and the base line noise is restrained to a negligible value.
This means that under use of the D₂ lamp, the present invention realizes the sensitive analysis which was considered to be difficult to realize due to reduction of light energy and the present invention can take the place of the D₂ lamp 29 and maintain/improve the prescribed sensitivity.

After the measurement is finished, the component of the sample actually flowed out of the separation column is delivered into the flow cell 37 and under the condition that the D₂ lamp 29 is lighted up, the light transmitted through the component of the sample is detected by the sample side photodiode 38 and the light energy on the reference side is detected by the photodiode 40. Detection signals Sa, Sr are inputted into the programmable amplifier 43 from time to time.
Then, the calculating section 46 calculates the adjustment ratio for the optimum light energy so that the light energies on the sample side and the reference side can be adjusted. In this way, a prescribed output of the detector can be obtained.

At that time, based on the detection signals Ss, Sr inputted from time to time, the automatic light energy adjusting section 47 stores the adjustment ratio which is inputted one after another, and renews the same so as to cope according as the analyzed situation.
Moreover, the automatic light energy adjusting section 47 is repeatedly operated to execute its function in a sequential manner. By doing so, there can be established an adjustment ratio in match with the reduction of light energy of the D₂ lamp 29 caused by lapse of time, and a light energy coping with the present situation can be obtained.

In actual practice of analysis, the adjustment ratio stored for each wavelength is used as an adjustment ratio of the programmable amplifier 43, and basically, the adjustment ratio is established for one wavelength.
It is also accepted that instead of preliminarily storing the optimum adjustment ratio, the above-mentioned calculation is carried out to establish the adjustment ratio at the time of change of the wavelength. It is also possible that the spectral characteristic is preliminarily obtained and the gain is fixed for each wavelength. It is also accepted that the head amplifiers 41, 42 are united with the programmable amplifier 43.

Since the light energy of the D₂ lamp 29 is reduced with the lapse of time, the lamp 29 is required to be replaced with new one timely. By removing the surface cover 24 and the UV shield cover 20 and removing the machine screws through the opening window 18, the lamp 29 can be exchanged. Thus, maintenance can easily be performed. Accordingly, the conventional huge labor is no more required.

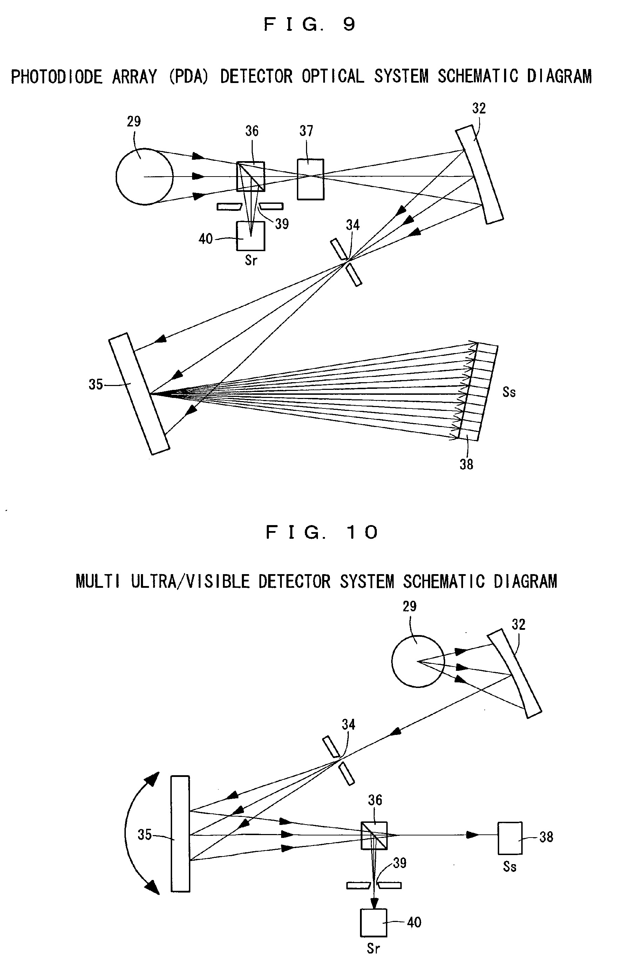

FIGS. 9 and 10 show other embodiments of the present invention, wherein those parts corresponding to the component parts of the above-mentioned construction are denoted by same reference numeral.
FIG. 9 shows a second embodiment in which the present invention is applied to a photodiode array capable of obtaining a three-dimensional chromatogram.
That is, in this photodiode array, the light source is a single light source of the D₂ lamp 29. Owing to this arrangement, it is no more required such a switching mechanism and a switching space as being required for a plurality of light sources. Thus, the down-sizing and low manufacturing cost can be achieved.

Moreover, based on the reference side detection signal Sr and the sample side detection signal Ss, adjustment ratios for the optimum light energies are obtained, and the reference side light energy and the sample side light energy are adjusted by multiplying the adjustment ratios Gr, Gs by the actually measured values Sr, Ss of the light energies. Then, by restraining the change quantities, the noise level of the output base line of the detector is lowered, so that the sensitivity and reliability can be improved.
A second slit 39 whose optical path is variable in width is arranged on the optical axis of the light reflected by the half mirror 36. By doing so, the light energies at the light receiving part on both the reference side and the sample side are adjusted to be generally equal. By doing so, the adjustment ratios thereof can be restrained in difference so that the light energies on both the sample side and the reference side can be optimized.

FIG. 10 shows a third embodiment in which the present invention is applied to a multi-wavelength detector.
That is, in this multi-wavelength detector, the grating 35 is pivotable and light of multi-wavelength can be diffracted. The light source is a single light source of the D₂ lamp as in the above-mentioned embodiment. Owing to this arrangement, it is no more required such a switching mechanism and a switching space as being required for a plurality of light sources. Thus, the down-sizing and low manufacturing cost can be achieved.

Moreover, based on the reference side detection signal Sr and the sample side detection signal Ss, adjustment ratios are obtained, and the reference side light energy and the sample side light energy are adjusted by multiplying the adjustment ratios Gr, Gs by the actually measured values Sr, Ss of the light energies. By doing so, the noise level of the base line of the detector, so that the sensitivity and reliability can be improved.
A second slit 39 whose optical path is variable in width is arranged on the optical axis of the light reflected by the half mirror 36. By doing so, the light energies at the light receiving part on both the reference side and the sample side are adjusted to be generally equal. By doing so, the adjustment ratios thereof can be restrained in difference so that the light energies on both the sample side and the reference side can be adjusted.

### Industrial Applicability

An optical detecting method and an optical detector according to the present invention are suited to be used for, for example, a light absorption type of the ultraviolet/visible detector for liquid chromatography, a spectrophotometer, a multi-wavelength ultraviolet/visible detector, a photodiode array detector and the like, capable of realizing detection of light energy of a wavelength range from the ultraviolet region to the visible region by using a single light source, without the use of two light sources in combination, eliminating the troublesome operation for switching two light sources from one to the other, reducing the number of parts, simplifying the construction, realizing down-sizing, weight-lightening and cost-down, automatically adjusting a light energy reduced region or reduced light energy, increasing light energies on both the sample side and the reference side, restraining increase of base line noise by a simple means, obtaining the improved reliability and sensitivity, and convenient for maintenance.

## Claims

1. An optical detecting method comprising irradiating light emitted from a light source to a sample in a cell inserted in an optical system, detecting light transmitted through said cell, detecting transmitted light on the reference side inserted in said optical system, adjusting those detection signals, and calculating an output from a detector based on the detection signals, wherein said method further comprises adjusting the detection signals on both the sample side and the reference side in such a manner as to correspond to an optimum output level of said detector and restraining a change quantity of a ratio between the detection signals on both the sample side and the reference side constituting the output of said detector.

2. An optical detector comprising an optical system capable of irradiating light emitted from a light source to a sample in a cell, a sample side light receiving means capable of detecting light transmitted through said cell, a light receiving means capable of detecting a transmitted light on a reference side inserted in said optical system, an adjusting circuit capable of adjusting said detection signal and an adjusting/controlling section capable of changing an adjustment ratio of said adjusting circuit, wherein the detection signals on both the sample side and the reference side are adjusted in such a manner as to correspond to an optimum output level of said detector and a change quantity of a ratio between the detection signals on both the sample side and the reference side constituting the output of said detector is restrained.

3. An optical detector according to claim 2, wherein a slit capable of changing the width of an optical path is disposed on an optical axis with respect to the reference side of said optical system and light receiving quantities in light receiving sections on both the sample side and the reference side are adjusted to approximately equal.

4. An optical detector according to claim 2, wherein a reflector capable of reflecting and focusing light emitted from said light source is arranged in a given position in a fitting manner.

5. An optical detector according to claim 2, wherein said light source is a single light source, the light energies on both the sample side and the reference side in a predetermined wavelength region of said light source can be adjusted based on the adjustment ratio of said adjusting/controlling section.

6. An optical detector according to claim 2, wherein the light energies on both the sample side and the reference side in a wavelength region adjacent to or partly overlapped with the wavelength region of said light source can be adjusted based on the adjustment ratio of said adjusting/controlling section.

7. An optical detector according to claim 6, wherein the light energies on both the sample side and the reference side in a wavelength region adjacent to or partly overlapped with said light source or the wavelength region of said light source are adjusted based on the adjustment ratio of said adjusting/controlling section and the light energies in a wavelength region of said light source or in a wavelength region adjacent to or partly overlapped with the wavelength region of said light source can be restrained.

8. An optical detector according to claim 7, wherein said wavelength region includes an ultraviolet region and a visible region.

9. An optical detector according to claim 2, wherein said optical detector is an ultraviolet/visible type detector, a photodiode array detector or a multi-wavelength detector.

10. An optical detector according to claim 5, wherein said single light source is retractably received in a lamp chamber of a lamp house.
